Europäisches Patentamt

European Patent Office

Office européen des brevets

(11) Publication number: **0 139 297**
**A2**

(12) # EUROPEAN PATENT APPLICATION

(21) Application number: **84112481.1**

(51) Int. Cl.⁴: **G 02 F 1/17**

(22) Date of filing: **16.10.84**

(30) Priority: **17.10.83 JP 192498/83**

(43) Date of publication of application:
**02.05.85 Bulletin 85/18**

(84) Designated Contracting States:
**CH DE GB LI**

(71) Applicant: **Hitachi Maxell Ltd.**
**No 1-1-88, Ushitora Ibaraki-shi**
**Osaka-fu(JP)**

(72) Inventor: **Oshima, Toshio**
**24-506, 2-11, Nagai-higashi Sumiyoshi-ku**
**Osaka-shi Osaka(JP)**

(72) Inventor: **Kitta, Kenichi**
**2196-587, Hirai Hinodemachi**
**Nishitama-gun Tokyo(JP)**

(72) Inventor: **Manabe, Toshikatsu**
**1-1-66, Suehiro-cho**
**Oume-shi Tokyo(JP)**

(74) Representative: **Selting, Günther, Dipl.-Ing. et al,**
**Deichmannhaus am Hauptbahnhof**
**D-5000 Köln 1(DE)**

(54) **Apparatus for driving electrochromic displaying device.**

(57) In an apparatus for driving an electrochromic display device having a plurality of display electrodes and a common electrode, there is provided means for applying erasure voltage to one or more non selected display during application of write-in voltage to one or more selected display electrodes, thereby preventing the non selected display electrodes from being colored.

EP 0 139 297 A2

./...

Croydon Printing Company Ltd.

*Fig. 2*

0139297

Title

Apparatus For Driving Electrochromic Displaying Device

Field of the Invention

The present invention relates to an apparatus for driving electrochromic displaying device, and more particularly to an apparatus for for effecting write-in and erasing of display of the electrochromic display device.

Background of the Invention

An electrochromic display device (referred to as ECD) is composed of a plurality of display electrodes coated with electrochromic material (referred to as EC material), a common electrode disposed commonly to oppose the display electrodes and electrolyte filled in the space between the display electrodes and the common electrode. With this arrangement, each of the display electrodes is illuminated with a predetermined color upon application of a predetermined voltage of predetermined polarity to the display electrodes and the common electrode. The color once illuminated is kept unchanged even if the electric power source is removed from the display electrodes and the common electrode. The illuminated color can be erased by application of the voltage of reversed polarity to the respective electrodes. As mentioned above, the ECD can illuminate (write-in) with a color and the illumination of color can be erased corresponding to the polarity of the applied voltage, in addition the ECD has an ability of memorization of display since the color once illuminated can be kept even if the power supply is removed from the ECD, therefore the EC devices are highly appreciated as power saving display equipments.

In order to display numeric characters using ECD, a plurality of display electrodes are disposed in generally 8 character shape and a common electrode is disposed opposing to the display electrodes. When writing-in the ECD, one or more of the display electrodes are selectively grounded corresponding to the character to be displayed and the common electrode is supplied with a positive drive voltage so that said selected display electrodes are illuminated with a predetermined color, whereby the ECD displays the desired character.

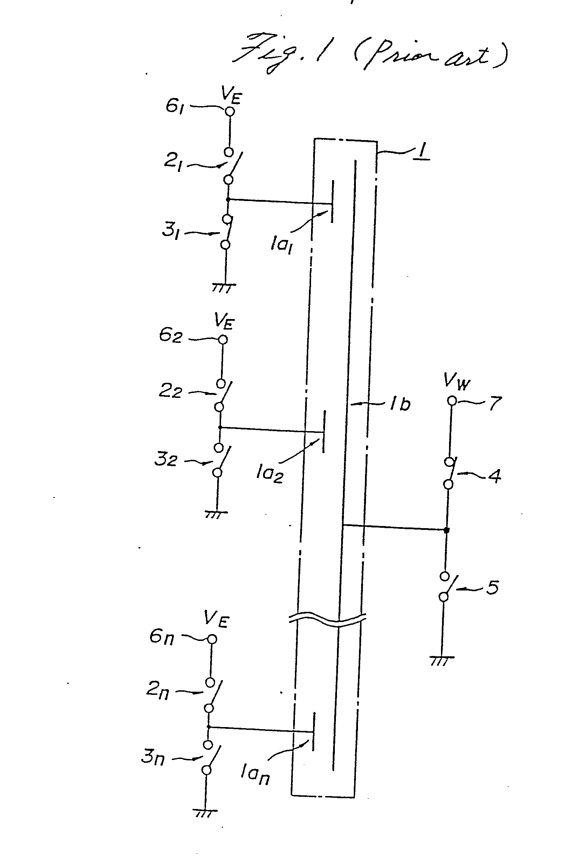

Fig. 1 shows an example of a circuit diagram of a conventional driving device of ECD, wherein ECD 1 comprises a plurality of display electrodes 1a1, 1a2...1an and a common electrode 1b opposing to the display electrodes. The respective display electrodes 1a1, 1a2... are grounded through switches $3_1$, $3_2$,...$3_n$ and are connected to a power supply $V_E$ for erasure through switches $2_1$, $2_2$...$2_n$ and terminals $6_1$, $6_2$,..$6_n$. The common electrode 1b is connected with a power supply Vw for writing-in through switches 4 and terminal 7 and is grounded through a switch 5. The power supplies $V_E$ and Vw have the same polarity and voltage. The voltage of the power supplies $V_E$ and VW may be different.

In order to write-in the display electrode 1a1 with the the 1a2 through 1an kept unilluminated, the switch 4 is turned on and the switch 5 is turned off so as to apply the voltage Vw to the common electrode 1b. The switch $2_1$ is turned off and the switch $3_1$ is turned on so as to ground the display electrode 1a1, whereby a predetermined voltage is supplied across the common electrode 1b and display electrode 1a1, thus, the display electrode 1a1 is illuminated with a predetermined color. It is noted that the display electrode 1a1 is driven by the voltage of -Vw relative to the common electrode 1b by neglecting the impedance of the switches, therefore the voltage Vw is defined by a value necessary to write-in the display electrode. On the contrary, the switches $2_2...2_n$ and $3_2...3_n$ are kept turned off, so that the display electrodes 1a2...1an are cut from the power supply, thus no voltage is applied to the display electrodes 1a2 through 1an, then the non selected display electrodes are not illuminated.

The write-in the ECD can be performed such a manner as described above, when the write-in operation is completed, the switches 3 and 4 are turned off, the color on the display electrode 1a1 can be kept displayed.

In order to erase the illumination of the color on the display electrode 1a1, the switch 5 is turned on to ground the common electrode 1b, on the other hand, the switches $2_1$, $2_2$,...$2_n$ are turned on so as to supply the voltage $V_E$ to the display electrodes 1a1 through 1an, whereby the voltage with the reversed polarity against the polarity at the time of write-in operation is supplied. It is noted that the voltage of $V_E$ is supplied to the display

electrodes 1a1, 1a2 through 1an relative to the common electrode 1b by neglecting the impedance of the switches, therefore, the value $V_E$ is defined by the necessary voltage for erasure of display. Thus the color on the display electrode 1a1 is erased.

As mentioned above, write-in, erasure and memorization are performed.

In the conventional arrangement described above, non selected electrodes are cut from the power supply by opening the respective switches for preventing the non selected electrodes from being colored, however, since bipolar transistors or MOSFETs are used as the switches, the impedance is not infinitive but has a limited value even if the switches are turned off. Therefore, even if the switches $2_2...2_n$ and $3_2...3_n$ are turned off for making the display electrodes 1a2 through 1an to be cut from the power supply, the display electrodes 1a2...1an are connected to the ground through a high impedance of the switches $3_2...3_n$, whereby the non selected display electrodes are slightly colored.

On the other hand, in case of erasing the color on the display electrode, the color can not be completely erased, in other words, the display electrode remains slightly colored. Specifically, the selected display electrode is colored by charging the common electrode and the selected display electrode and the color on the selected display electrode is erased by discharging. For example, when the switch $2_1$ is turned on, the switch $3_1$ is turned off

so as to cause the discharging current to flow from the selected display electrode through the terminal $6_1$, switch $2_1$, display electrode 1a1, common electrode 1b and switch 5. However, the amount of the discharging current is slightly decreased by the current flowing through the switch $3_1$, whereby the selected electrode can not be fully discharged, so that the selected display electrode remains slightly colored. This light color remains on the display electrode if the display electrode is not selected for illumination in the subsequent process. Such residual color on the non selected display electrode will be referred to as cross color.

The cross color lowers the contrast of the display harming the quality of the display.

Summary of the invention

An essential object of the present invention is to provide an apparatus for driving an electrochromic display device which enables to improve the contrast and quality of display.

Another object of the present invention is to provide an apparatus for driving an electrochromic display device which enables to prevent occurrence of cross color on the non selected display electrodes.

According to the present invention, there is provided an apparatus for driving an electrochromic display device having a plurality of display electrodes on which electrochromic material is provided and a common electrode opposing commonly to each of the display electrodes, comprising means for selectively applying a write-in voltage of a predetermined polarity across selected one or more display electrodes and the common electrode for a predetermined period of time so as to effect illuminating color on the selected one or more display electrodes and then for applying an erasure voltage of a polarity opposite to that of said write-in voltage across said selected one or more display electrodes and the common electrode for a period of time sufficient to effect the erasure of color on the selected one or more display electrodes, wherein an improvement which comprises means for applying a suppress voltage of a polarity opposite to that of said write-in voltage across each of non-selected display electrodes and the common electrode when the write-in voltage is applied across the selected display electrodes and the common electrode so as to prevent illumination of color on the non-selected display electrodes.

Brief Explanation of the Drawings

Fig. 1 is a schematic circuit diagram showing one example of a conventional circuit arrangement for driving an electrochromic display device, and

Fig. 2 is a schematic circuit diagram showing a preferred embodiment of the driving circuit arrangement for the electrochromic display device according to the present invention, and

Fig. 3 is a schematic circuit diagram showing a further embodiment of the driving circuit arrangement for the electrochromic display device according to the present invention.

Detailed Description of the Preferred Embodiment

Before the description proceeds, it is noted that like parts are designated by like reference numerals.

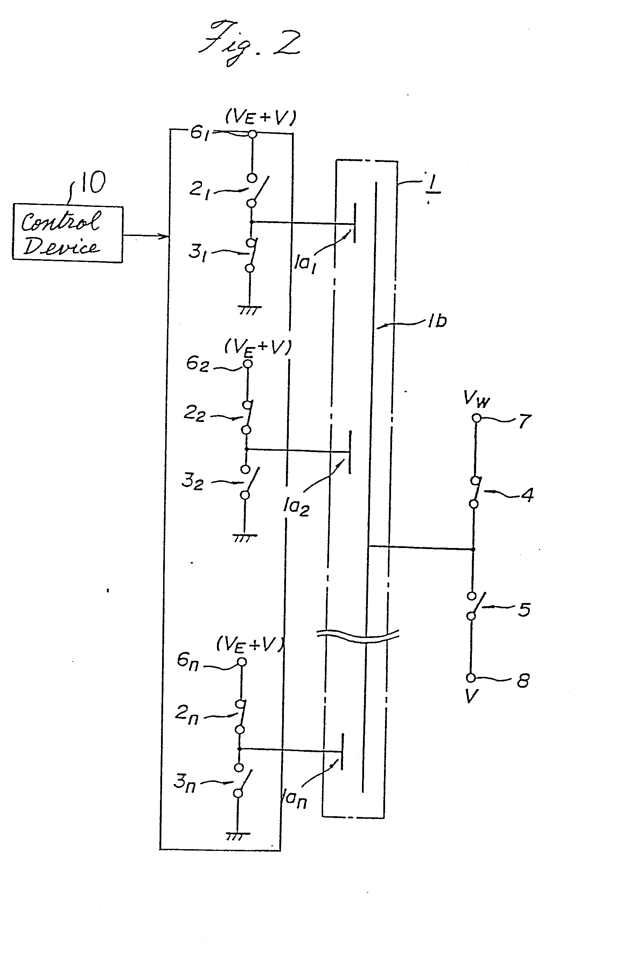

Referring to Fig. 2, the terminals $6_1$, $6_2$ and $6_n$ are applied with the voltage of $V_E + V$ and the switch 5 is applied with the voltage V through a terminal 8. Vw is the voltage necessary for writing-in the ECD 1 and $V_E$ is the voltage necessary for erasing the illumination of ECD 1.

A control device 10 is provided for operation of the switches $2_1$ through $2_n$, $3_1$ through $3_n$, 4 and 5 in a manner as described hereinafter for illumination and erasure of the ECD 1.

Assuming that the display electrode 1a1 is selected for display and the display electrodes 1a2 through 1an are non selected electrodes, in order to write-in the ECD 1, the switch 4 is turned on, the switch 5, switch $2_1$ are turned off and the switch $3_1$ is turned on. The voltage Va1 supplied to the display electrode 1a1 is represented as

$$Va1 = -Vw \qquad \cdots\cdots\cdots\cdots\cdots\cdots (1)$$

by taking the potential of the common electrode 1b as the reference voltage. Thus, the display electrode 1a1 is colored or write-in operation is effected.

0139297

With respect to the non selected display electrodes, when the display electrode lan is taken for example, the switch 2n is turned on and the switch 3n is turned off. As the result, the voltage Van is represented as

$$Van = V_E + V - Vw \cdots \cdots \cdots (2)$$

by taking the potential of the common electrode 1b as the reference voltage. By taking the voltage V in such a value that Van is greater than 0, the non selected display electrode is applied with the voltage having the polarity of erasure i,e., the reversed polarity of the write-in voltage.

In a specific case, by taking V=Vw, from the equation (2), $Van = V_E$ which is the voltage for erasure can be supplied to the display electrode lan.

By this arrangement, since the erasure voltage is supplied to each of the non selected display electrode, the color on the non selected display electrodes can be effectively erased, thereby preventing cross color on the non selected display electrodes, resulting in obtaining a display of a high quality.

In order to erase the color memorized on the selected display electrode la1, the switch 4 is turned off with the switch 5 turned on and the switches $2_1$, $2_2 \ldots 2_n$ are turned on with the switches $3_1$, $3_2 \ldots 3_n$ turned off. By this operation, the voltage supplied on the display electrodes la1, la2, ... lan is represented by

$$(V_E + V) - V = V_E$$

by taking the potential on the common electrode 1b as the reference voltage, whereby the voltage for erase can be supplied to the display electrodes.

In a case where the erase on the non selected display electrodes can be made in such a degree that cross color does not occur or is negligible, the voltage V can be defined as Van = 0. In this case, no write-in current is supplied to the non selected display electrodes at the time of write-in operation, whereby cross color does not occur. By selecting the voltage $V_E$ to be greater than or equal to the voltage Vw, the switch 5 can be connected to the ground as shown in Fig. 1, thereby enabling to omit the power supply for the voltage V.

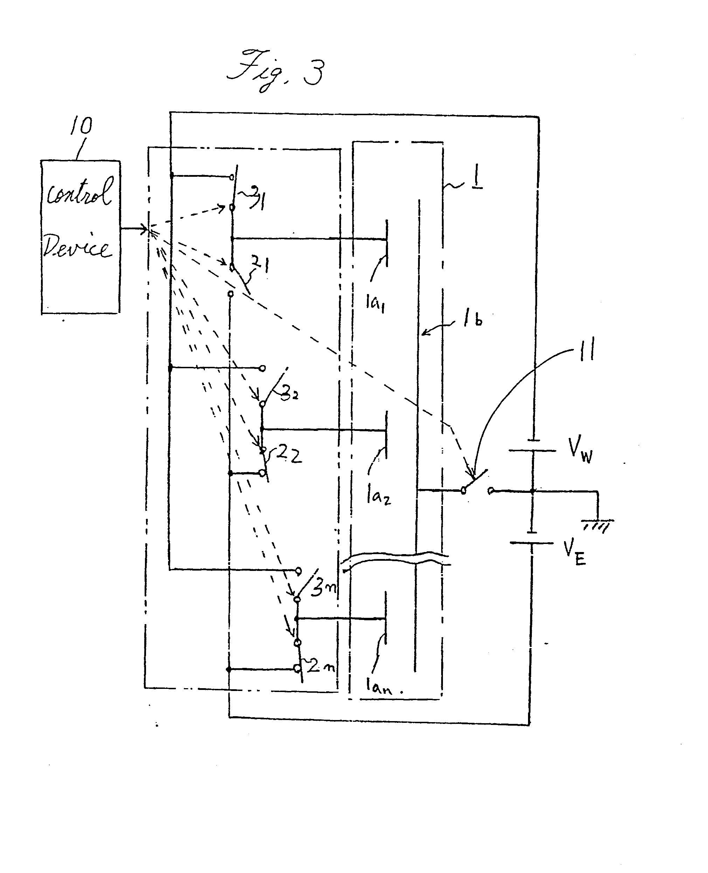

Fig. 3 shows another embodiment of the present invention in which each of the switches $3_1$, $3_2$,...3n is connected with the negative terminal of the power source Vw ,the positive terminal of which is grounded. Each of the switches $2_1$, $2_2$,...2n is connected with the positive terminal of the power source $V_E$. the negative terminal of which is grounded. In this embodiment, the switches 4 and 5 in the embodiment of Fig. 2 are omitted and a switch 11 is connected between the common electrode 1b and the ground. The switch 11 is turned on during the write-in period and the erasure period by the output of the control device 10. In this embodiment, in order to write in the display electrode 1a1, the switches $3_1$ and 11 are turned on, so that the write-in voltage Vw is applied across the common electrode 1b and the display electrode 1a1 with the display

electrode 1a1 to be negative.    On the other hand the non
selected display electrodes 1a2 through 1an are applied with
the erasure voltage $V_E$ through the switches $2_2$ through $2_n$
which are in on state, whereby the display electrode 1a1 can
be illuminated with color and the non selected display
electrodes 1a2 through 1an are prevented from being colored.
For erasure of the color on the display electrode 1a1, for
example, the switches $2_1$ and 11 are turned on with the
switch $3_1$ turned off, whereby the display electrode 1a1 is
applied with the erasure voltage $V_E$.    When the writ-in
operation or erasure operation is completed the switch 11 is
turned off.    A similar operation can be made for the other
display electrodes 1a2 through 1an by operating the switches
$2_1$ through $2_n$, $3_1$ through $3_n$ and 11 under the operation of
the control device 10 as described above.

What is claimed is.

1.    An apparatus for driving an electrochromic display device having a plurality of display electrodes on which electrochromic material is provided and a common electrode opposing commonly to each of the display electrodes, comprising means for selectively applying a write-in voltage of a predetermined polarity across selected one or more display electrodes and the common electrode for a predetermined period of time so as to effect illuminating color on the selected one or more display electrodes and then for applying an erasure voltage of a polarity opposite to that of said write-in voltage across said selected one or more display electrodes and the common electrode for a period of time sufficient to effect the erasure of color on the selected one or more display electrodes, wherein an improvement which comprises means for applying a suppress voltage of a polarity opposite to that of said write-in voltage across each of non-selected display electrodes and the common electrode when the write-in voltage is applied across the selected display electrodes and the common electrode so as to prevent illumination of color on the non-selected display electrodes.

2.    The apparatus according to claim 1, wherein said suppress voltage is equal to zero or more in the reversed polarity.

3.    The apparatus according to claim 1, wherein said suppress voltage applying means comprises a source of the suppress voltage, switch means operatively connecting said suppress voltage source to each of the non-selected display electrodes, and control means for operatively rendering said switch means operative when said selected one or more display electrodes are applied with said write-in voltage, so that the application of the suppress voltage to each of said non-selected display electrodes is effected.

4. The apparatus according to claim 1, wherein said suppress voltage applying means comprises first switches $(2_1, 2_2, ..2_n)$ connected at one terminal thereof to each of the display electrodes and at the other terminal thereof to a source of the suppress voltage, second switches $(3_1, 3_2, ...3_n)$ connected at one end thereof to each of the display electrodes and at the other terminal thereof to a source of the write-in voltage, and control means for selectively rendering the second switches connected to the selected one or more display electrodes in turn-on state thereof and for operatively rendering the first switches connected to the non-selected display electrodes in turn-on state thereof respectively.

5. The apparatus according to claim 4, wherein said source of the suppress voltage includes a source of the erasure voltage $(V_E)$ and a source of a predetermined voltage (V), a summed voltage $(V_E + V)$ forming said suppress voltage and being equal to or larger in absolute value than the write-in voltage (Vw).

6. The apparatus according to claim 5, wherein said predetermined voltage is equal to in absolute value said write-in voltage.

Fig. 1 (Prior art)

*Fig. 2*

Fig. 3